# EUROPEAN PATENT APPLICATION

(11) **EP 4 649 807 A1**
(43) Date of publication of application: **19.11.2025**
(21) Application number: 24175718.6
(22) Date of filing: 14.05.2024
(51) Int. Cl.: A01C 15/00, A01C 15/12, A01C 15/18, A01C 17/00

(54) **AGRICULTURAL SPREADER MACHINE AND METHOD FOR OPERATING AN AGRICULTURAL SPREADER MACHINE FOR DISTRIBUTING A GRANULAR MATERIAL SUCH AS FERTILIZER**

(71) Applicant: Kverneland Group Nieuw-Vennep B.V., 2153 LR Nieuw-Vennep (NL)
(72) Inventor: KOS, Jacob, 2153 LR Nieuw-Vennep (NL)
(74) Representative: Bittner, Thomas L.

(57) **Abstract**

The present disclosure refers to an agricultural spreader machine for distributing a granular material such as fertilizer, comprising: a first hopper (1) configured to receive a granular material to be distributed; an outlet (3) of the first hopper (1), wherein the first hopper (1) is configured to output the granular material through the outlet (3); a second hopper (8) configured to receive the granular material; an inlet (7) of the second hopper (8), wherein the second hopper (8) is configured to receive the granular material via the inlet (7); a transporter (6) configured to receive the granular material output through the outlet of the first hopper (1) and supply the granular material to the second hopper (8) through the inlet (7); a spreader system (14) comprising a first spreader unit (15) and a second spreader unit (16), each of the first and second spreader unit (15; 16) configured to distribute the granular material; a first outlet (19) of the second hopper (8) configured to output a first partial amount of the granular material supplied to the second hopper (8), wherein the first partial amount of the granular material is received and distributed by the first spreader unit (15); and a second outlet (20) of the second hopper (8) configured to output a second partial amount of the granular material supplied to the second hopper (8), wherein the second partial amount of the granular material is received and distributed by to the second spreader unit (16).Further, a method for operating an agricultural spreader machine for distributing a granular material such as fertilizer is provided.

## Description

The present disclosure refers to an agricultural spreader machine and a method for operating an agricultural spreader machine for distributing a granular material such as fertilizer.

### Background

Agricultural spreader machines are applied for distributing granular materials such as fertilizer in the field. The spreader machine regularly comprises a hopper for receiving the granular material to be distributed. From the hopper the granular material is supplied to a spreader system configured to distribute the granular material. The spreader system may comprise on or more spreader units which each are receiving and distributing the granular material from the hopper. For supplying the granular material to a plurality of spreader units, individual streams of granular material are provided at an outlet of the hopper. By means of such individual streams of granular material, the different spreader units are separately fed with the granular material.

### Summary

It is an object to provide an agricultural spreader machine for distributing a granular material such as fertilizer and a method for operating an agricultural spreader machine which allow for supplying the granular material to different spreader units more efficiently.

For solving the object, an agricultural spreader machine for distributing a granular material such as fertilizer and a method for operating an agricultural spreader machine for distributing a granular material such as fertilizer according to the independent claims 1 and 16, respectively, are provided. Additional aspects are disclosed in the pendent claims.

According to one aspect, an agricultural spreader machine for distributing a granular material such as fertilizer is provided, the agricultural spreader machine comprising: a first hopper configured to receive a granular material to be distributed; an outlet of the first hopper, wherein the first hopper is configured to output the granular material through the outlet; a second hopper configured to receive the granular material; an inlet of the second hopper, wherein the second hopper is configured to receive the granular material via the inlet; a transporter configured to receive the granular material output through the outlet of the first hopper and supply the granular material to the second hopper through the inlet; a spreader system comprising a first spreader unit and a second spreader unit, each of the first and second spreader unit configured to distribute the granular material; a first outlet of the second hopper configured to output a first partial amount of the granular material supplied to the second hopper, wherein the first partial amount of the granular material is received and distributed by the first spreader unit; and a second outlet of the second hopper configured to output a second partial amount of the granular material supplied to the second hopper, wherein the second partial amount of the granular material is received and distributed by to the second spreader unit.

According to another aspect, a method for operating an agricultural spreader machine for distributing a granular material such as fertilizer is provided, the method comprising: receiving a granular material in a first hopper; outputting the granular material through an outlet of the first hopper; receiving the granular material output through the outlet of the first hopper by a transporter; supplying the granular material to a second hopper through an inlet of the second hopper; outputting a first partial amount of the granular material supplied to the second hopper; outputting a second partial amount of the granular material supplied to the second hopper; receiving and distributing the first partial amount of the granular material by a first spreader unit of a spreader system; and receiving and distributing the second partial amount of the granular material by a second spreader unit of a spreader system.

The granular material to be distributed can be received in the first hopper. Through an outlet of the first hopper the granular material may be provided to the transporter which is configured to transport the granular material to an inlet of a second hopper by which the first and second spreader unit of the spreader system are supplied with the granular material to be distributed. Thus, there is a stream of granular material from the first to the second hopper, wherein the granular material is transported by means of the transporter. Separation of the granular material into a first and second partial amount is conducted or performed in the second hopper, wherein the first partial amount of the granular material is received in and distributed by the first spreader unit and the second partial amount of the granular material is supplied to and distributed by the second spreader unit.

Thus, there is no need for conditioning the stream of granular material outputted through the outlet of the first hopper for supplying the granular material to the two different spreader units. Rather, the granular material can be outputted through the outlet of the first hopper independent of steps to be conducted later for conditioning of the granular material for supplying the first and second spreader unit.

The transporter is operable for inter hopper transport of the granular material between the first and the second hopper. Different from two streams provided side by side on the transporter, a single stream of the granular material may be provided on the transporter for supplying the granular material to the second hopper. The stream of granular material between the first and second hopper may be a continuous stream of granular material. Alternatively, there may be an interrupted (non-continuous) stream of granular material.

The wording granular material is used here refers a conglomeration of discrete solid, macroscopic particles characterized by a loss of energy whenever the particles interact (a common example would be friction when grains collide). The constituents that compose granular material are large enough such that they are not subject to thermal motion fluctuations. Thus, the lower size limit for grains in granular material is about 1 µm. Within such meaning, the granular material may comprises powder and / or granules. Though having the same chemical composition, powder or granules differ with respect to their particle sizes. Traditional powdered media consist of tiny particles with a size less than about 100 µm, but the granules are visible to the naked eye, reaching about 1,000 µm or more.

A first bottom of the first hopper and a second bottom of the second hopper may be provided at a first level of height above ground and a second level of height above ground, respectively, wherein the first level of height is lower than the second level of height. This will allow for providing the first hopper with a lower center of mass point compared to the center of mass point of the second hopper. Lowering the center of mass point for the first hopper may be provided for improving mechanical stability of the agricultural spreader machine in operation.

In some embodiments, the first hopper may provide for a main hopper initially receiving the granular material, while the second hopper may provide for a sub-hopper having a lower capacity for receiving granular material. In such case, having a lower center of mass point for the hopper having the greater capacity (first hopper) the further support mechanical stability of the agricultural spreader machine.

With respect to the agricultural spreader machine, the following may be provided: the outlet of the first hopper is located at a first level of height above ground; the inlet of the second hopper is located at a second inlet level of height above ground; and the transporter is configured to transport upwards the granular material from the first outlet level of height to the second inlet level of height above ground. A difference between the first outlet level in height and the second inlet level in height above ground may be equal to or different from the difference between the first level of height and the second level of height above ground for the first bottom of the first hopper and the second bottom of the second hopper, respectively. If the second inlet level of height is higher than the first outlet level of height above ground, the granular material outputted through the outlet of the first hopper is elevated to the second inlet level of height by the transporter. In some embodiment, the transporter may be operable for transporting the granular material along a ramp between the outlet of the first hopper and the inlet of the second hopper.

In an embodiment it may be provided that the first and second outlet of the second hopper are located at a second outlet level of height above ground which is equal to or different from the first outlet level of height of the outlet of the first hopper.

The outlet of the first hopper may be provided as a single opening outlet. In addition, or as an alternative, at least one of the first and second outlet of the second hopper may be provided as a single opening outlet. In an alternative embodiment, at least one of the outlet of the first hopper, the first outlet of the second hopper, and the second outlet of the second hopper may be having more than one opening. For example, two openings may be provided which may allow producing two separated streams of the granular material.

The agricultural spreader machine may further comprise a level sensor device configured to detect a material (filling) level of the granular material in at least one of the first hopper and the second hopper. The level sensor device is operable to detect a filling level for the material in the hopper. The device may comprise one or more level sensors. In an embodiment, at least a first level sensor is operable to detect a material level for the granular material in the first hopper. At least a second level sensor may be operable to detect a material level for the granular material in the second hopper. Depending on level sensor signals, supplying additional granular material to at least one of the first and second hopper may be controlled.

The agricultural spreader machine may further comprise a controller configured to control operation of the transporter, wherein the controller is automatically operable to stop operation of the transporter, if first level sensor signals provided by the level sensor device identify a first material level for the second hopper being equal to or higher than an upper threshold level, thereby, preventing further supply of granular material to the second hopper; and starting operation of the transporter, if second level sensor signals provided by the level sensor device identify a second material level for the second hopper being equal to or lower than a lower threshold level, thereby, starting supply of granular material to the second hopper. The first level sensor signals are identifying that the second hopper is filled up at least to the upper threshold level. Thus, no further granular material should be supplied to the second hopper. With respect to the second level sensor signals, the second material level is identified for the second hopper which requires supplying additional granular material to the second hopper in order to feed the first and second spreader unit.

In some embodiment, in addition or as an alternative, the controller may be automatically operable to control operation of the transporter such as start and stop depending on sensor signals detected by one or more other sensors such as at least one of (i) position signals identifying a geographical position of the agricultural spreader machine and detected by a position sensor and (ii) filling level signals identifying a filling level of the first hopper and detected by a level sensor device assigned to the first hopper.

The agricultural spreader machine may further comprise an outlet closure cap configured to open and close the outlet of the first hopper, wherein operation of the outlet closure cap is controllable by the controller, and wherein the controller is automatically operable to stop operation of the transporter delayed in time after closing of the outlet by the outlet closure cap. The delaying of the stop of the operation of the transporter can be configured to transport to the inlet of the second hopper any granular material which is still left on the transporter after closing the outlet of the first hopper, thereby, cleaning out granular material from the transporter. All granular material will be removed from the transporter prior to stopping operation of the transporter. This will avoid the granular material from dropping of the transporter after the outlet of the first hopper has been closed. Granular material is saved from getting lost.

A delay time for delaying stop of operation of the transporter may be determined in dependence on a speed of transportation provided by the transporter. The higher the speed of transportation provided by the transporter, the shorter the time of delay may be selected. The controller may be operable to select the delay time in dependence of the present speed of transportation provided by the transporter.

The transporter may comprise a conveyor belt configured to receive the granular material outputted through the outlet of the first hopper and supply the granular material to the second hopper through the inlet. A single (endless) conveyor belt may be provided. The conveyor belt may be made of rubber or a similar material.

On a transport surface of the conveyor belt projections may be located or arranged which are configured to prevent the granular material from sliding on the outer surface of the conveyor belt. For example, the projections may be configured to facilitate upwards transport of the granular material. The projections may extend in a direction transversely to a moving direction when the conveyor belt is running on the rollers. In this and other embodiments, the projections may extend between opposite end sides of the conveyor belt.

In an embodiment, on the outer surface of the conveyor belt cleats may be provided which extend in the moving direction. The cleats may be provided on opposite sides of the conveyor belt. Specifically, the cleats may be located adjacent to a side or lateral edge of the conveyor belt. In addition or as an alternative, cleats may be formed in a middle section of the conveyor belt.

At least some of the cleats may be extending with an angle of inclination (acute angle) with respect to the moving direction.

The cleats may be formed between adjacent projections. One or more cleats may be formed between two adjacent projections. Some space or distance between adjacent projections may be essentially covered fully by the cleat(s). The cleats may be extending upwards from the outer surface of the conveyor belt by a height essentially equal to a height of the projections. A plurality of cleats may comprise first cleats having a first height and second cleats having a second height which is smaller than the first height. In some embodiment, the cleats having the first height may be located adjacent to the lateral edge of the conveyor belt. Cleats provided with the second (smaller) height may be located distant from the lateral edge of the conveyor belt.

In a certain embodiment, the cleats may be attached to the conveyor belt by means of an adhesive material, for example, the cleats may be glued.

The second hopper may comprise a first sub-hopper having the first outlet, and a second sub-hopper having the second outlet. The first outlet may be provided in a bottom area of the first sub-hopper. The second outlet may be located in a bottom area of the second sub-hopper. By means of the first and second sub-hopper the stream of granular material received in or supplied to the second hopper may be divided into the first and second partial amount of the granular material. The granular material, after being received in the second hopper may be supplied to the first and second sub-hopper due to gravity. The granular material may be provided to the first and second sub-hopper through a common hopper space located above both the first and second sub-hopper within the second hopper.

The agricultural spreader machine may further comprise a first hopper transporter configured to transport the granular material received in the first hopper to the outlet of the first hopper. The first hopper transporter is provided separately from the transporter. A first hopper transporter may be extending on a bottom side of the first hopper. At least partially it may provide for the bottom of the first hopper.

The first hopper transporter may comprise a conveyor belt. The conveyor belt may provide for the bottom of the first hopper at least in part.

The first hopper transporter may be configured for outputting the granular material through the outlet of the first hopper. In some embodiments, the granular material may be conveyed through the outlet of the first hopper by means of the first hopper transporter.

The agricultural spreader machine may further comprise a condition sensor configured to provide interfering sensor signals identifying a failure condition for the transporter. The interfering sensor signals can be observed and analyzed for avoiding damage to the transporter, for example, because of one or more elements of the transporter heating up due to friction. If, for example, the conveyor belt running on rollers is not in a correct relative position with respect to the rollers, interfering friction may be present. A temperature sensor provided with the condition sensor may detect such heat for providing interfering sensor signals identifying the failure condition for the transporter. In response, an operator of the agricultural spreader machine may act. For example, further operation of the agricultural spreader machine may be stopped. As an alternative or in addition, further operation of the agricultural spreader machine may be stopped automatically in response to the condition sensor providing the interfering sensor signals.

The agricultural spreader machine may further comprise a height adjuster operable to move at least one of the first spreader unit and the second spreader unit between a first spreading level of height above ground and a second spreading level of height above ground, the second spreading level of height being different from the first spreading level of height above ground. The height adjuster may comprise one or more actuators such as hydraulic cylinder. Height adjustment with respect to the spreading level of height above ground will allow for optimized distribution of the granular material. For example, different level of height above ground for the spreading may be applied in dependence on a growing height of the plants.

Height adjustment by means of the height adjuster may change relative position between the outlet of the first hopper and the inlet of the second hopper. In response, a difference of height above ground between the outlet and the inlet may be amended. The transporter may be operable for adjusting to such change of height, for example, by adjusting inclination of the transporter. Alternatively, the transporter may be moved without changing the angle of inclination.

In still another embodiment, the transporter is kept in a fixed position. Thus, there is no adjustment for the transporter in response to the height adjuster moving at least one of the first spreader unit and the second spreader unit between the first spreading level of height above ground and the second spreading level of height above ground.

In some embodiments, the agricultural spreader machine may comprise a crop sensor device operable to detect crop height signals identifying a height of crop on the field. The height adjuster may be operable to adjust height of at least one of the first and second spreading unit in response to the crop height signals. This allows for having the spreading unit(s) located in a pre-defined height above the crop. It will support efficiently distributing the granular material. The crop sensor device may be functionally connected to the controller. The controller may be operable to generate height control signals in response to the crop height signals for controlling height of at least one of the first spreading unit and the second spreading unit.

In an embodiment, the agricultural spreader machine may comprise an inclination sensor device operable to detect inclination signals identifying an inclination of the agricultural spreader machine during operation on the field, for example, in a hillside situation. The height adjuster may be operable to adjust height of at least one of the first and second spreading unit in response to the inclination signals. This allows for having the spreading unit(s) located in a pre-defined height above ground in dependence on the inclination signals. It will support efficiently distributing the granular material. The inclination sensor device may be functionally connected to the controller. The controller may be operable to generate height control signals in response to the inclination signals for controlling height above ground of at least one of the first spreading unit and the second spreading unit. In addition or as an alternative, the controller may be operable to generate inclination control signals in response to the inclination signals for controlling inclination of the transporter. Thus, inclination of the transporter may be adjusted in dependence on the inclination signals detected.

In an embodiment, the following may be provided: (i) in the first spreading position, at least one of the first spreader unit and the second spreader unit is provided in a first relative position with respect to the first hopper; and (ii) in the second spreading position, at least one of the first spreader unit and the second spreader unit is provided in a second relative position with respect to the first hopper, the second relative position being different from the first spreading position.

In an embodiment may be provided that the height adjuster is operable to jointly move at least two of the first spreader unit, the second spreader unit, and the second hopper between the first spreading level of height and the second spreading level of height above ground. For such embodiment, there is fixed relative positioning between the second hopper and at least one of the first spreader unit and the second spreader unit. Joined movement will keep fixed relative positioning. The second hopper is moved for height adjustment together with the first and / or the second spreader unit. For example, lowering the first spreading level of height for the first spreader unit will also lower height of the second hopper above ground, thereby, lowering the second inlet level of height for the inlet of the second hopper. Intern, a height difference to be surmounted by the transporter will be changed as well.

The height adjuster may be attached to a frame of the transporter, for example, to a frame holding the rollers on which the conveyor belt is running. In an embodiment, the height adjuster may be operable to jointly move at least two of the first spreader unit, the second spreader unit, and the second hopper along a moving direction which is essentially parallel to the conveyor belt running on the rollers.

The height adjuster may be operable to jointly move both the first spreader unit and the second spreader unit between the first spreading level of height and the second spreading level of height above ground. Both spreader units are moved together, thereby, keeping up a relative position between the first and second spreader unit.

In an alternative embodiment, an agricultural spreader machine for distributing a granular material such as fertilizer is provided, the agricultural spreader machine comprising: a first hopper configured to receive a granular material to be distributed; an outlet of the first hopper, wherein the first hopper is configured to output the granular material through the outlet; a second hopper configured to receive the granular material; an inlet of the second hopper, wherein the second hopper is configured to receive the granular material via the inlet; a transporter configured to receive the granular material output through the outlet of the first hopper and supply the granular material to the second hopper through the inlet; a spreader system configured to distributed the granular material supplied to the second hopper; and a height adjuster operable to move the spreader system between a first spreading level of height above ground and a second spreading level of height above ground, the second spreading level of height being different from the first spreading level of height above ground.

The aspects disclosed above for the agricultural spreader machine may be apply to the method for operating the agricultural spreader machine for distributing the granular material such as fertilizer *mutatis mutandis.*

### Description of embodiments

Following, further embodiments, are described by reference to figures. In the figures, show:
- Fig. 1: a schematic representation of an assembly for an agricultural spreader machine;
- Fig. 2: a schematic representation of further details of the assembly in Fig. 1;
- Fig. 3: a schematic representation of another assembly for an agricultural spreader machine;
- Fig. 4: a schematic representation of a further assembly for an agricultural spreader machine;
- Fig. 5: a schematic representation of an agricultural spreader machine in a side view;
- Fig. 6: a schematic representation of the agricultural spreader machine in Fig. 5 in a perspective view;
- Fig. 7: a schematic representation of the agricultural spreader machine in Fig. 5 in another perspective view, wherein a second hopper and a spreader system are in a higher position; and
- Fig. 8: a schematic representation of a transport comprising a conveyor belt in a side view.

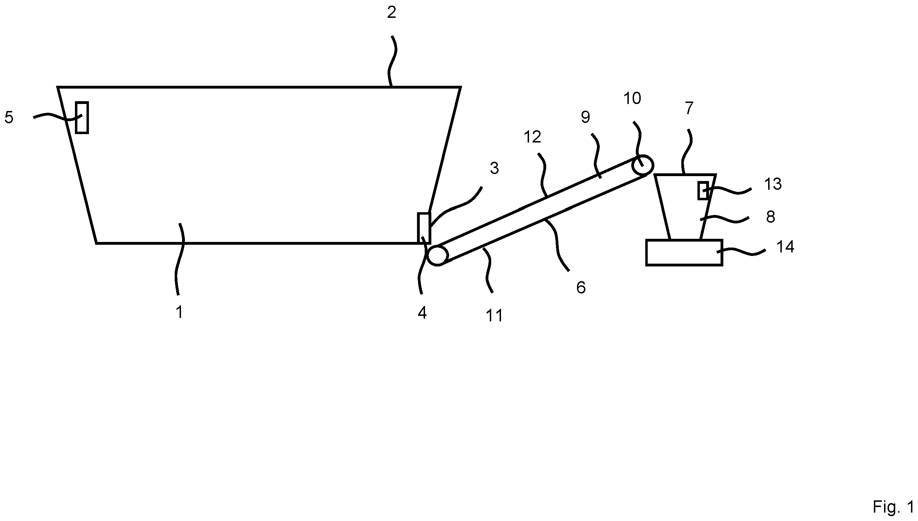

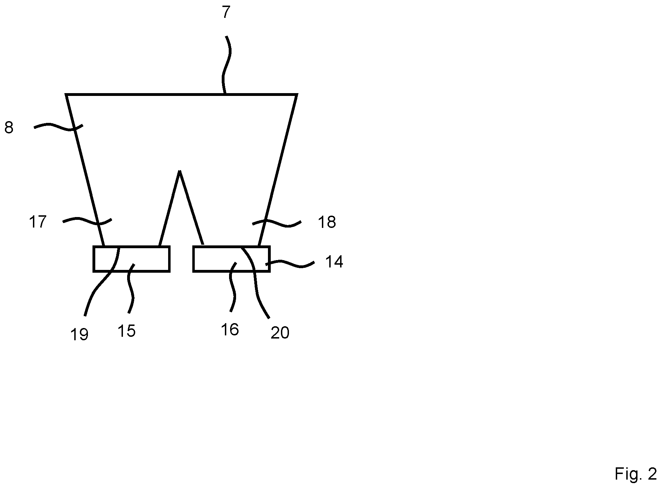

Referring to Fig. 1 and 2, an assembly for an agricultural spreader machine for distributing a granular material such as fertilizer is depicted. Granular material to be distributed by the agricultural spreader machine is received in a first hopper 1. The granular material can be supplied to the first hopper 1 through an inlet 2 of the first hopper 1. The granular material received in the first hopper 1 will be outputted through an outlet 3 of the first hopper 1 which is assigned an outlet closure 4 configured to open and close the outlet 3 of the first hopper 1. The outlet 3 may be provided with a single opening for outputting the granular material received in the first hopper 1. Alternatively, the outlet 3 of the first hopper 1 may comprise a plurality of openings for outputting the granular material. In the different embodiments, a single stream of granular material may be provided through the outlet 3. A continuous or non-continuous stream may be provided.

With respect to the embodiment shown in Fig. 1, a first level sensor 5 is provided with the first hopper 1, wherein the first level sensor 5 is configured to provided level sensor signals identifying a filling level for the granular material received in the first hopper 1. Supplying granular material through the inlet 2 of the first hopper 1 may be stopped if the level sensor signals provided by the first level sensor 5 identify the filling level reaching or crossing an upper threshold level.

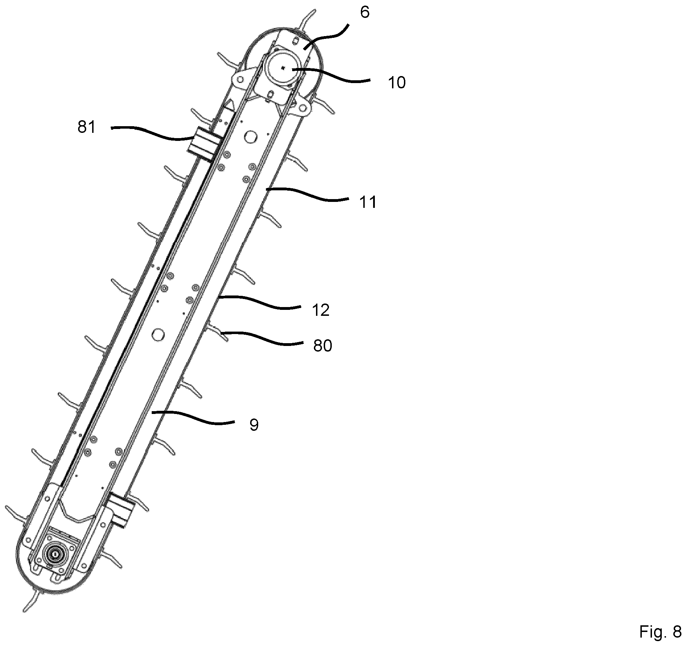

Granular material outputted through the outlet 3 of the first hopper 1 is received by or on a transporter 6 operable for transporting the granular material to an inlet 7 of a second hopper 8 provided separately from the first hopper 1. With respect to the embodiment shown, the transporter 6 is comprising a conveyor belt 9 provided with rollers 10 and a belt 11 to be moved by rotating the rollers 10. On an outer surface 12 of the belt 11 may be provided with projections (see Fig. 8) for preventing the granular material received on the belt 11 from sliding while transporting the granular material between the outlet 3 of the first hopper 1 and the inlet 7 of the second hopper 8.

Referring the Fig. 1, the outlet 3 of the first hopper 1 is located at a first outlet level of height above ground. The inlet 7 of the second hopper 8 is located at a second inlet level of height above ground which is higher than the first outlet level of height. Thus, by means of the transporter 6 the granular material will be lifted to the second inlet level of height above ground where the inlet 7 of the second hopper 8 is located. In an alternative embodiment (not shown), the outlet 3 of the first hopper 1 and the inlet 7 of the second hopper 8 may be located at about the same level of height above ground.

A second level sensor 13 is provided within the second hopper 8 for detecting level sensor signals identifying a filling level for the granular material within the second hopper 8.

For distributing, the granular material will be supplied from the second hopper 8 to a spreader system 14 which in the embodiment shown comprises a first and a second spreader unit 15, 16 (see Fig. 2). Fig. 2 shows a schematic representation of the arrangement of the second hopper 8 and the spreader system 14 in a front view. After the granular material is supplied through the inlet 7 of the second hopper 8, the stream of the granular material is divided into a first partial amount of granular material supplied to a first sub-hopper 17 and a second partial amount of granular material supplied to a second sub-hopper 18 in the second hopper 8. The partial amount of granular material is provided through a first outlet 19 of the second hopper 8 to the first spreader unit 15, and a second outlet 20 of the second hopper 8 to the second spreader unit 16. The first and second outlet 19, 20 of the second hopper 8 may each have assigned an outlet closure (not shown) operable for opening and closing the respective outlet.

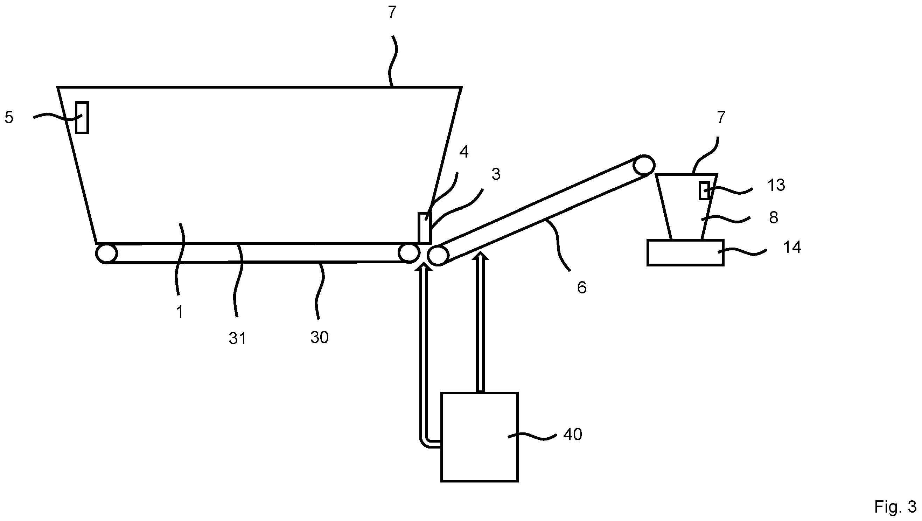

Referring to Fig. 3, a schematic representation of another assembly for an agricultural spreader machine is depicted. Another transporter 30 which, for example, may comprise another conveyor belt is provided at a bottom 31 of the first hopper 1. While the transporter 6 is operable for inter hopper transport between the first hopper 1 and the second hopper 8, the other transporter 30 is configured for inner hopper transport of the granular material within the first hopper 1 towards the outlet 3. The other transporter may also be referred to first hopper transporter. In an embodiment, the other transporter 30 may be operable for supporting outputting the granular material through the outlet 3 to the transporter 6.

A controller 40 is provided. The controller 40 is configured to control operation of at least the outlet closure 4 assigned to the outlet 3 of the first hopper 1 for triggering opening and closing of the outlet 3. Further, the controller 40 is configured to control operation of the transporter 6, specifically for stopping and running the transporter 6 for transporting the granular material to the inlet 7 of the second hopper 8. In case level sensors signals provided by the second level sensor 13 also functionally connected to the controller 40 are identifying a material level for the second hopper 8 being equal to or higher than an upper threshold level, the controller 40 will act for preventing supply of further granular material to the inlet 7 of the second hopper 8.

In response, the controller 40 will trigger closing of the outlet closure 4 for closing the outlet 3. Thus, no further granular material will be outputted to the transporter 6. Delayed with respect to the closing of the outlet 3, the transporter 6 will be triggered to stop. Such delay in time will ensure that all material which is still on the transporter 6 will be delivered to the inlet 7, thereby, removing all granular material from the transporter 6 after the outlet 3 has been closed.

If the second level sensor 13 identifies a material level for the second hopper 8 being equal to or lower than a lower threshold level, the controller 40 will trigger opening of the outlet 3 and starting operation of the transporter 6 for supplying further granular material to the inlet 7.

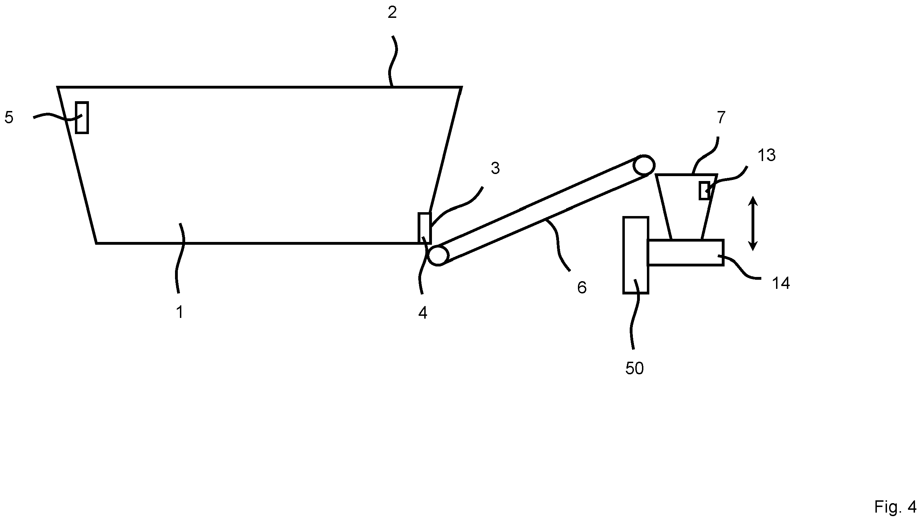

Referring to Fig. 4, a schematic representation of the further assembly for an agricultural spreader machine is depicted. A height adjuster 50 is provided which is operable to jointly move the second hopper 8 and the spreader system 14 in a vertical direction, thereby, adjusting a level of height above ground. The height adjuster 50 may comprise one or more actuators being provided with one or more hydraulic cylinders, for example. Height adjustment by means of the height adjuster 50 will change relative position between the outlet 3 of the first hopper 1 and the inlet 7 of the second hopper 8. In response, a difference of height above ground between the outlet 3 and the inlet 7 will be amended. The transporter 6 can be adjusted to such change of height, for example, by adjusting inclination of the transporter 6.

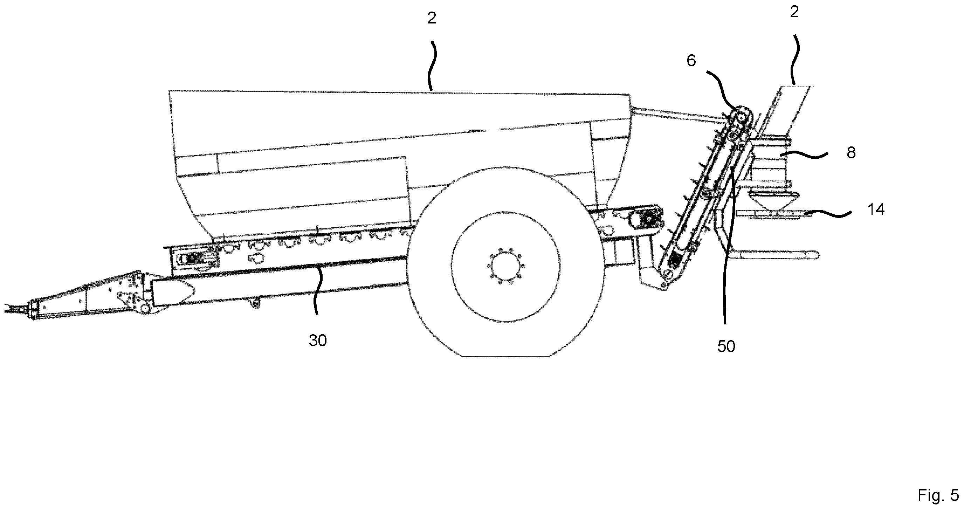

Referring to Fig. 5 to 7, a schematic representation of an agricultural spreader machine is depicted. In the embodiment shown, the agricultural spreader machine is provided as an implement to be hooked to a tractor (not shown) for operation. Alternatively, the agricultural spreader machine may be carried by a tractor. Also, a self-propelled agricultural spreader machine may be provided in some embodiments.

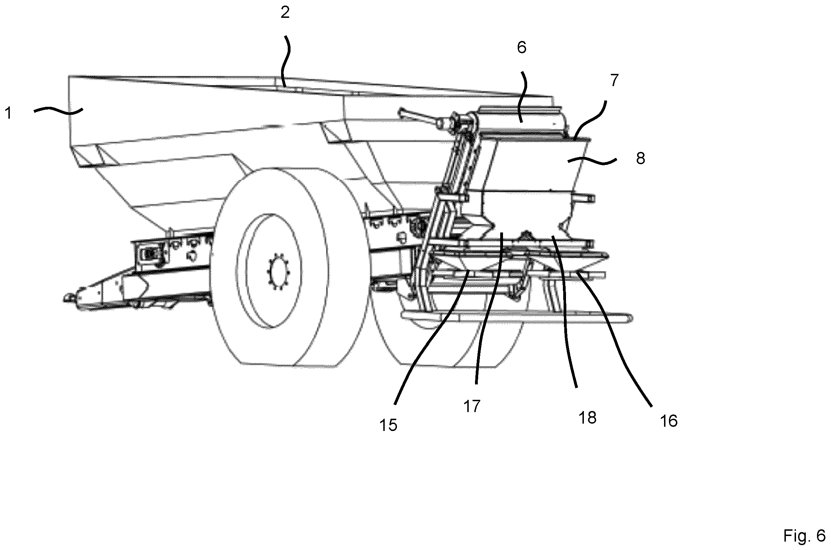

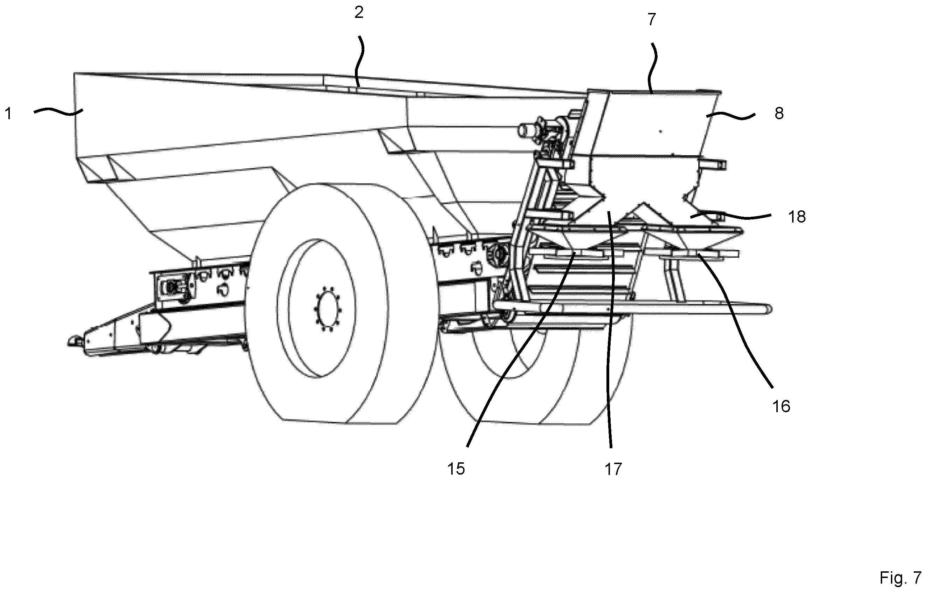

The spreader system 14 comprising the first and second spreader unit 15, 16 together with the second hopper 8 can be placed in different height above ground. Fig. 5 and 7 show a higher position, while Fig. 6 shows a lower position of the assembly comprising the spreader system 14 having the first and second spreader unit 15, 16, and the second hopper 8. In the embodiment shown, the transporter 6 is not moved. Thus, moving the assembly comprising the second hopper 8 will change relative position between the second hopper 8 and the transporter 6.

For adjusting relative position between the transporter 6 and the second hopper 8, specifically with respect to the inlet 7 of the second hopper 8, inclination of the transporter 6 may be adjusted.

Fig. 8 shows an embodiment of the transporter 6 in a side view in greater detail. The conveyor belt 9 provided with rollers 10 and a belt 11 to be moved by rotating the rollers 10. On the outer surface 12 of the belt 11 projections 80 are located configured to prevent the granular material received on the belt 11 from sliding while transporting the granular material between the outlet 3 of the first hopper 1 and the inlet 7 of the second hopper 8.

The transporter 6 comprises a condition sensor 81 configured to provide interfering sensor signals identifying a failure condition for the transporter 6. The interfering sensor signals can be observed and analyzed for avoiding damage to the transporter 6, for example, because of one or more elements of the transporter 6 heating up due to friction. If, for example, the belt 11 running on the rollers 10 is not in a correct relative position with respect to the rollers 10, interfering friction may be present. A temperature sensor provided with the condition sensor 81 may detect such heat for providing interfering sensor signals identifying the failure condition for the transporter 6. A re-calibration of the rollers 10 may be applied. In such case, user input may be received, e.g. via a screen, e.g. in a tractor. Automatic calibration based on condition sensor signals is also possible by changing positions of the roller 10.

The features disclosed in this specification, the figures and / or the claims may be material for the realization of various embodiments, taken in isolation or in various combinations thereof.

## Claims

1. An agricultural spreader machine for distributing a granular material such as fertilizer, comprising
- a first hopper (1) configured to receive a granular material to be distributed;
- an outlet (3) of the first hopper (1), wherein the first hopper (1) is configured to output the granular material through the outlet (3);
- a second hopper (8) configured to receive the granular material;
- an inlet (7) of the second hopper (8), wherein the second hopper (8) is configured to receive the granular material via the inlet (7);
- a transporter (6) configured to receive the granular material output through the outlet of the first hopper (1) and supply the granular material to the second hopper (8) through the inlet (7);
- a spreader system (14) comprising a first spreader unit (15) and a second spreader unit (16), each of the first and second spreader unit (15; 16) configured to distribute the granular material;
- a first outlet (19) of the second hopper (8) configured to output a first partial amount of the granular material supplied to the second hopper (8), wherein the first partial amount of the granular material is received and distributed by the first spreader unit (15); and
- a second outlet (20) of the second hopper (8) configured to output a second partial amount of the granular material supplied to the second hopper (8), wherein the second partial amount of the granular material is received and distributed by to the second spreader unit (16).

2. Agricultural spreader machine of claim 1, wherein a first bottom of the first hopper (1) and a second bottom of the second hopper (8) are provided at a first level of height above ground and a second level of height above ground, respectively, the first level of height being lower than the second level of height.

3. Agricultural spreader machine of claim 1 or 2, wherein
- the outlet (3) of the first hopper (1) is located at a first level of height above ground;
- the inlet of the second hopper (8) is located at a second inlet level of height above ground; and
- the transporter (6) is configured to transport upwards the granular material from the first outlet level of height to the second inlet level of height above ground.

4. Agricultural spreader machine of at least one of the preceding claims, wherein the outlet (3) of the first hopper (1) is provided as a single opening outlet.

5. Agricultural spreader machine of at least one of the preceding claims, further comprising a level sensor device (5; 13) configured to detect a material level of the granular material in at least one of the first hopper (1) and the second hopper (8).

6. Agricultural spreader machine of claim 5, further comprising a controller (40) configured to control operation of the transporter (6), wherein the controller (40) is automatically operable to
- stop operation of the transporter (6), if first level sensor signals provided by the level sensor device identify a first material level for the second hopper (8) being equal to or higher than an upper threshold level, thereby, preventing further supply of granular material to the second hopper (8); and
- starting operation of the transporter (6), if second level sensor signals provided by the level sensor device identify a second material level for the second hopper (8) being equal to or lower than a lower threshold level, thereby, starting supply of granular material to the second hopper (8).

7. Agricultural spreader machine of claim 6, further comprising an outlet closure cap (4) configured to open and close the outlet (3) of the first hopper (1), wherein operation of the outlet closure cap (4) is controllable by the controller (40), and wherein the controller (40) is automatically operable to stop operation of the transporter (6) delayed in time after closing of the outlet (3) by the outlet closure cap (4).

8. Agricultural spreader machine of at least one of the preceding claims, wherein the transporter (6) comprises a conveyor belt configured to receive the granular material outputted through the outlet (3) of the first hopper (1) and supply the granular material to the second hopper (8) through the inlet (7).

9. Agricultural spreader machine of at least one of the preceding claims, wherein the second hopper (8) is comprising a first sub-hopper (17) having the first outlet, and a second sub-hopper (18) having the second outlet.

10. Agricultural spreader machine of at least one of the preceding claims, further comprising a first hopper transporter (30) configured to transport the granular material received in the first hopper (1) to the outlet (3) of the first hopper (1).

11. Agricultural spreader machine of at least one of the preceding claims, further comprising a condition sensor (81) configured to provide interfering sensor signals identifying a failure condition for the transporter (6).

12. Agricultural spreader machine of at least one of the preceding claims, further comprising a height adjuster (50) operable to move at least one of the first spreader unit (15) and the second spreader unit (16) between a first spreading level of height above ground and a second spreading level of height above ground, the second spreading level of height being different from the first spreading level of height above ground.

13. Agricultural spreader machine of claim 12, wherein
- in the first spreading position, at least one of the first spreader unit (15) and the second spreader unit (16) is provided in a first relative position with respect to the first hopper (1); and
- in the second spreading position, at least one of the first spreader unit (15) and the second spreader unit (16) is provided in a second relative position with respect to the first hopper (1), the second relative position being different from the first spreading position.

14. Agricultural spreader machine of claim 12 or 13, wherein the height adjuster is operable to jointly move at least two of the first spreader unit (15), the second spreader unit (16) and the second hopper (8) between the first spreading level of height and the second spreading level of height above ground.

15. Agricultural spreader machine of at least one of the claims 12 to 14, wherein the height adjuster is operable to jointly move both the first spreader unit (15) and the second spreader unit (16) between the first spreading level of height and the second spreading level of height above ground.

16. A method for operating an agricultural spreader machine for distributing a granular material such as fertilizer, comprising
- receiving a granular material in a first hopper (1);
- outputting the granular material through an outlet (3) of the first hopper (1);
- receiving the granular material output through the outlet (3) of the first hopper (1) by a transporter;
- supplying the granular material to a second hopper (8) through an inlet of the second hopper (8);
- outputting a first partial amount of the granular material supplied to the second hopper (8);
- outputting a second partial amount of the granular material supplied to the second hopper (8);
- receiving and distributing the first partial amount of the granular material by a first spreader unit (15) of a spreader system (13); and
- receiving and distributing the second partial amount of the granular material by a second spreader unit (16) of a spreader system (13).
